# EUROPEAN PATENT APPLICATION

(11) **EP 2 924 884 A1**
(43) Date of publication of application: **30.09.2015**
(21) Application number: 14768298.3
(22) Date of filing: 18.03.2014
(51) Int. Cl.: H04B 5/00

(54) **NEGOTIATION WORKING MODE METHOD, DEVICE, AND SYSTEM**

(30) Priority: 20.03.2013 CN 201310090247
(71) Applicant: Huawei Device Co., Ltd., Longgang District Shenzhen Guangdong 518129 (CN)
(72) Inventor: JIN, Zhihao, Shenzhen Guangdong 518129 (CN)
(74) Representative: Goddar, Heinz J.
(86) International application number: PCT/CN2014/073590
(87) International publication number: WO 2014/146566

(57) **Abstract**

The present invention discloses a working mode negotiating method, device, and system, and belongs to the field of wireless communications. The method includes: receiving, by a first device, a negotiation message that a second device sends after detecting the first device; activating, by the first device, a P2P mode when determining that information about a commodity for which a prepayment has been made successfully needs to be acquired from the second device; or activating a card emulation mode when information about a commodity for which a prepayment has been made successfully does not need to be acquired from the second device; sending, by the first device, an activated working mode to the second device, so that the second device activates a working mode that is the same as the activated working mode; and performing communication according to the activated working mode when the first device and the second device perform communication by using an NFC technology. The present invention improves a success rate of near field communication.

## Description

### TECHNICAL FIELD

The present invention relates to the field of wireless communications, and in particular, to a working mode negotiating method, device, and system.

### BACKGROUND

An LBS (Location Based Service, location based service) is a value-added service that acquires location information of a mobile terminal user through a wireless communications network or by means of external positioning, and provides a corresponding service for the user with the support of a GIS (Geographic Information System, geographic information system) platform. NFC (Near Field Communication, near field communication) is a short range high-frequency wireless communications technology, and allows non-contact point-to-point data transmission between electronic devices within a short range. Application of the NFC technology in fields such as mobile payment has a bright prospect.

Usually, a user uses a first device to acquire, by using the LBS, location information of a second device used by a merchant and commodity information of the merchant, arrives at a location of the merchant according to the acquired location information of the second device, selects a corresponding commodity according to the commodity information of the merchant after arriving at the location of the merchant, and pays for the selected commodity by means of NFC.

However, the first device and the second device have various working modes; and when working modes of the first device and the second device are different, the two cannot perform near field communication, thereby resulting in a failed payment.

### SUMMARY

To improve a success rate of near field communication, the present invention provides a working mode negotiating method, device, and system. The technical solutions are as follows:
According to a first aspect, a working mode negotiating method is provided, where the method includes:
   receiving, by a first device, a negotiation message that a second device sends after detecting the first device;
   activating, by the first device, a P2P (peer to peer, P2P for short, translated as point-to-point or peer-to-peer in Chinese) mode when determining that information about a commodity for which a prepayment has been made successfully needs to be acquired from the second device;
   activating, by the first device, a card emulation mode when determining that information about a commodity for which a prepayment has been made successfully does not need to be acquired from the second device;
   sending, by the first device, an activated working mode to the second device, so that the second device activates a working mode that is the same as the activated working mode, where the activated working mode includes: the P2P mode or the card emulation mode; and
   performing communication according to the activated working mode when the first device and the second device perform communication by using a near field communication NFC technology.

With reference to the first aspect, in a first possible implementation manner, after the first device receives the negotiation message sent by the second device, the method further includes:
activating, by the first device, a passive mode when determining that a remaining battery capacity of the first device is less than a preset threshold;
activating, by the first device, an active mode when determining that a remaining battery capacity of the first device is not less than the preset threshold; and
sending, by the first device, an activated communication mode to the second device, so that the second device activates a communication mode that is the same as the activated communication mode, where the activated communication mode includes: the active mode or the passive mode.

With reference to the first aspect or the first implementation manner, in a second possible implementation manner, before the first device receives the negotiation message sent by the second device, the method further includes:
acquiring, by the first device, location information of the second device and commodity information from a first payment server by using a location based service; providing the location information of the second device and the commodity information for a user; and making a prepayment according to a commodity selected by the user;
receiving, by the first device, an authentication credential sent by the first payment server, where the authentication credential is generated by the first payment server according to prepayment information received from a second payment server; and
generating, by the first device, an NFC data exchange format message according to the authentication credential and the prepayment information, where the NFC data exchange format message is used for NFC verification.

According to a second aspect, a working mode negotiating method is further provided, where the method includes:
sending, by a second device, a negotiation message to a first device after detecting the first device, where the negotiation message is used to trigger the first device to activate a P2P (peer to peer, P2P for short, translated as point-to-point or peer-to-peer in Chinese) mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
receiving, by the second device, an activated working mode sent by the first device, and activating a working mode that is the same as the activated working mode, where the activated working mode includes: the P2P mode or the card emulation mode; and
performing communication according to the activated working mode when the second device and the first device perform communication by using a near field communication NFC technology.

With reference to the second aspect, in a first possible implementation manner, the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold.

With reference to the second aspect or the first implementation manner, in a second possible implementation manner, the method further includes:
receiving an activated communication mode sent by the first device, and activating a communication mode that is the same as the activated communication mode, where the activated communication mode includes: the active mode or the passive mode.

With reference to the second aspect, or the first or second implementation manner, in a third possible implementation manner, the method further includes:
receiving, by the second device, an authentication credential and a device identifier of the first device that are sent by a first payment server, where the authentication credential is generated by the first payment server according to prepayment information received from a second payment server; and
monitoring, by the second device, the first device according to the device identifier of the first device and/or the authentication credential.

With reference to the third implementation manner, in a fourth possible implementation manner, the monitoring, by the second device, the first device according to the device identifier of the first device and/or the authentication credential includes:
acquiring, by the second device at intervals of a preset period through a communications network, location information of the first device corresponding to the device identifier of the first device; and determining, until the location information of the first device complies with a preset range, that the first device is detected; or
monitoring, by the second device, a card swiping device disposed within a preset range; and determining, when the first device performs card swiping on the card swiping device, that the first device is detected.

According to a third aspect, a first device for working mode negotiation is further provided, where the first device includes:
a first receiving module, configured to receive a negotiation message that a second device sends after detecting the first device;
a first activation module, configured to activate a P2P (peer to peer, P2P for short, translated as point-to-point or peer-to-peer in Chinese) mode when it is determined that information about a commodity for which a prepayment has been made successfully needs to be acquired from the second device, or to activate a card emulation mode when it is determined that information about a commodity for which a prepayment has been made successfully does not need to be acquired from the second device;
a first sending module, configured to send an activated working mode to the second device, so that the second device activates a working mode that is the same as the activated working mode, where the activated working mode includes: the P2P mode or the card emulation mode; and
a first near field communication module, configured to perform communication according to the activated working mode when the first device and the second device perform communication by using a near field communication NFC technology.

With reference to the third aspect, in a first possible implementation manner, the first activation module is further configured to activate a passive mode when it is determined that a remaining battery capacity of the first device is less than a preset threshold, or to activate an active mode when it is determined that a remaining battery capacity of the first device is not less than the preset threshold; and
the first sending module is further configured to send an activated communication mode to the second device, so that the second device activates a communication mode that is the same as the activated communication mode, where the activated communication mode includes: the active mode or the passive mode.

With reference to the third aspect or the first implementation manner, in a second possible implementation manner, the first device further includes: a prepayment module and a first generation module, where
the prepayment module is configured to: before the first receiving module receives the negotiation message sent by the second device, acquire location information of the second device and commodity information from a first payment server by using a location based service, provide the location information of the second device and the commodity information for a user, and make a prepayment according to a commodity selected by the user;
the first receiving module is further configured to receive an authentication credential sent by the first payment server, where the authentication credential is generated by the first payment server according to prepayment information received from a second payment server; and
the first generation module is configured to generate an NFC data exchange format message according to the authentication credential and the prepayment information, where the NFC data exchange format message is used for NFC verification.

According to a fourth aspect, a second device for working mode negotiation is further provided, where the second device includes:
a second sending module, configured to send a negotiation message to a first device after the first device is detected, where the negotiation message is used to trigger the first device to activate a P2P (peer to peer, P2P for short, translated as point-to-point or peer-to-peer in Chinese) mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
a second receiving module, configured to receive an activated working mode sent by the first device, where the activated working mode includes: the P2P mode or the card emulation mode;
a second activation module, configured to activate a working mode that is the same as the activated working mode received by the second receiving module; and
a second near field communication module, configured to perform communication according to the activated working mode when the second device and the first device perform communication by using a near field communication NFC technology.

With reference to the fourth aspect, in a first possible implementation manner, the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold, where
the second receiving module is further configured to receive an activated communication mode sent by the first device, where the activated communication mode includes: the active mode or the passive mode; and
the second activation module is further configured to activate a communication mode that is the same as the activated communication mode.

With reference to the fourth aspect or the first implementation manner, in a second possible implementation manner, the second receiving module is further configured to receive an authentication credential and a device identifier of the first device that are sent by a first payment server, where the authentication credential is generated by the first payment server according to prepayment information received from a second payment server; and
the second device further includes:
a monitoring module, configured to monitor the first device according to the device identifier of the first device and/or the authentication credential received by the second receiving module.

According to a fifth aspect, a working mode negotiating system is further provided, including: the first device for working mode negotiation described above and the second device for working mode negotiation described above.

The foregoing technical solutions provided in the present invention improve a success rate of near field communication. In addition, a working mode is activated before the near field communication; therefore, compared with a common manner in which the working mode is activated during the near field communication, time is shortened, and efficiency is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a working mode negotiating method according to an embodiment of the present invention;
FIG. 2 is a flowchart of a working mode negotiating method according to another embodiment of the present invention;
FIG. 3 is a flowchart of a working mode negotiating method according to still another embodiment of the present invention;
FIG. 4 is a flowchart of a working mode negotiating method according to yet another embodiment of the present invention;
FIG. 5 is a schematic structural diagram of a first device for working mode negotiation according to another embodiment of the present invention;
FIG. 6 is a schematic structural diagram of a second device for working mode negotiation according to still another embodiment of the present invention;
FIG. 7 is a schematic structural diagram of a first device for working mode negotiation according to yet another embodiment of the present invention;
FIG. 8 is a schematic structural diagram of a second device for working mode negotiation according to still yet another embodiment of the present invention; and
FIG. 9 is a schematic structural diagram of a working mode negotiating system according to still another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

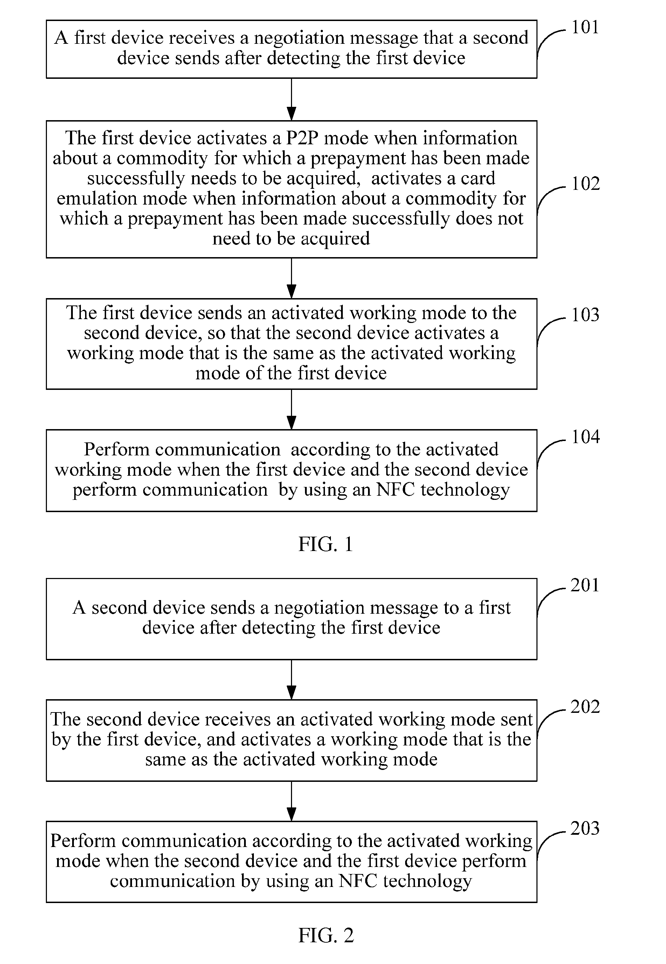

Referring to FIG. 1, an embodiment of the present invention provides a working mode negotiating method, including:
101: A first device receives a negotiation message that a second device sends after detecting the first device.
102: The first device activates a P2P mode when determining that information about a commodity for which a prepayment has been made successfully needs to be acquired from the second device.
103: The first device activates a card emulation mode when determining that information about a commodity for which a prepayment has been made successfully does not need to be acquired from the second device.
104: The first device sends an activated working mode to the second device, so that the second device activates a working mode that is the same as the activated working mode, where the activated working mode includes: the P2P mode or the card emulation mode.
105: Perform communication according to the activated working mode when the first device and the second device perform communication by using a near field communication (NFC) technology.

In this embodiment, the card emulation mode refers to a working mode in which the first device sends information to the second device, and the P2P (Peer to Peer, translated as point-to-point or peer-to-peer in Chinese) mode refers to a working mode in which the first device and the second device can send information to each other for interaction.

With reference to the foregoing method, in a first implementation manner, after the first device receives the negotiation message sent by the second device, the method further includes:
activating, by the first device, a passive mode when determining that a remaining battery capacity of the first device is less than a preset threshold; or
activating, by the first device, an active mode when determining that a remaining battery capacity of the first device is not less than the preset threshold; and
sending, by the first device, an activated communication mode to the second device, so that the second device activates a communication mode that is the same as the activated communication mode, where the activated communication mode includes: the active mode or the passive mode.

It should be noted that the first device may simultaneously send or may separately send the activated communication mode and an activated working mode to the second device, which is not specifically limited in the present invention.

With reference to the foregoing method or the first implementation manner, in a second implementation manner, before the first device receives the negotiation message sent by the second device, the method further includes:
acquiring, by the first device, location information of the second device and commodity information from a first payment server by using a location based service; providing the location information of the second device and the commodity information for a user; and making a prepayment according to a commodity selected by the user;
receiving, by the first device, an authentication credential sent by the first payment server, where the authentication credential is generated by the first payment server according to prepayment information received from a second payment server; and
generating, by the first device, an NFC data exchange format message according to the authentication credential and the prepayment information, where the NFC data exchange format message is used for NFC verification.

The foregoing method provided in this embodiment improves a success rate of near field communication. In addition, a working mode is activated before the near field communication; therefore, compared with a common manner in which the working mode is activated during the near field communication, time is shortened, and efficiency is improved.

Referring to FIG. 2, another embodiment of the present invention provides a working mode negotiating method, including:
201: A second device sends a negotiation message to a first device after detecting the first device, where the negotiation message is used to trigger the first device to activate a P2P mode when the first device determines that information about a commodity for which a prepayment has been made successfully needs to be acquired from the second device, or to activate a card emulation mode when the first device determines that information about a commodity for which a prepayment has been made successfully does not need to be acquired from the second device.
202: The second device receives an activated working mode sent by the first device, and activates a working mode that is the same as the activated working mode, where the activated working mode includes: the P2P mode or the card emulation mode.
203: Perform communication according to the activated working mode when the second device and the first device perform communication by using a near field communication (NFC) technology.

With reference to the foregoing method, in a first implementation manner, the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold.

With reference to the foregoing method or the first implementation manner, in a second implementation manner, the method further includes:
receiving an activated communication mode sent by the first device, and activating a communication mode that is the same as the activated communication mode, where the activated communication mode includes: the active mode or the passive mode.

With reference to the foregoing method, the first implementation manner, or the second implementation manner, in a third implementation manner, the method further includes:
receiving, by the second device, an authentication credential and a device identifier of the first device that are sent by a first payment server, where the authentication credential is generated by the first payment server according to prepayment information received from a second payment server; and
monitoring, by the second device, the first device according to the device identifier of the first device and/or the authentication credential.

In this embodiment, the device identifier of the first device may be acquired by the second device from the prepayment information sent by the first payment server, or the second device may also acquire the device identifier of the first device when the second device provides location information of the second device and commodity information for the first device, which is not specifically limited in the present invention.

With reference to the third implementation manner, in a fourth implementation manner, the monitoring, by the second device, the first device according to the device identifier of the first device and/or the authentication credential includes:
acquiring, by the second device at intervals of a preset period through a communications network, location information of the first device corresponding to the device identifier of the first device; and determining, until the location information of the first device complies with a preset range, that the first device is detected; or
monitoring, by the second device, a card swiping device disposed within a preset range; and determining, when the first device performs card swiping on the card swiping device, that the first device is detected.

The foregoing method provided in this embodiment improves a success rate of near field communication. In addition, a working mode is activated before the near field communication; therefore, compared with a common manner in which the working mode is activated during the near field communication, time is shortened, and efficiency is improved.

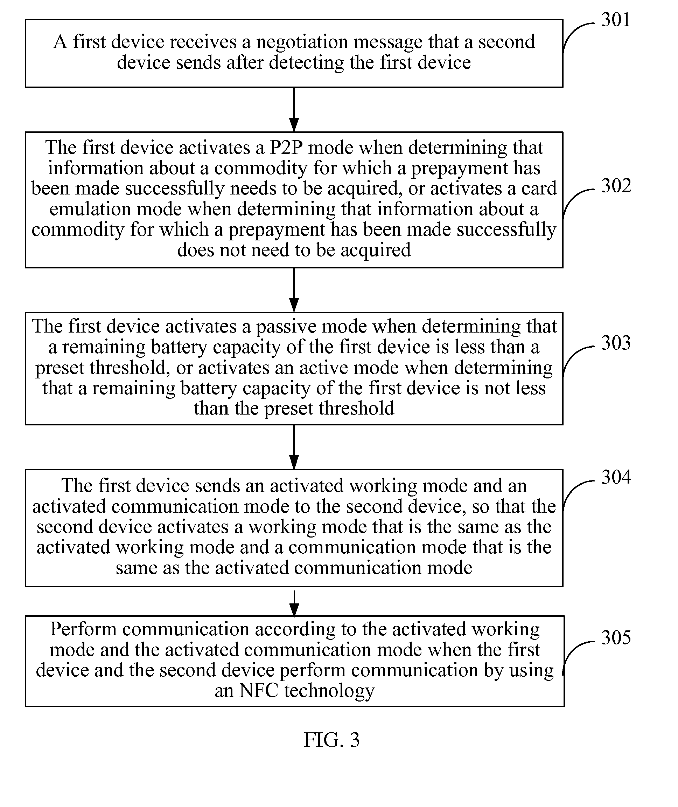

Referring to FIG. 3, still another embodiment of the present invention provides a working mode negotiating method, including:
301: A first device receives a negotiation message that a second device sends after detecting the first device.
302: The first device activates a P2P mode when determining that information about a commodity for which a prepayment has been made successfully needs to be acquired from the second device, or the first device activates a card emulation mode when determining that information about a commodity for which a prepayment has been made successfully does not need to be acquired from the second device.
303: The first device activates a passive mode when determining that a remaining battery capacity of the first device is less than a preset threshold, or the first device activates an active mode when determining that a remaining battery capacity of the first device is not less than the preset threshold.
304: The first device sends an activated working mode and an activated communication mode to the second device, so that the second device activates a working mode that is the same as the activated working mode, and activates a communication mode that is the same as the activated communication mode, where the activated working mode includes: the P2P mode or the card emulation mode, and the activated communication mode includes: the active mode or the passive mode.
305: Perform communication according to the activated working mode and the activated communication mode when the first device and the second device perform communication by using a near field communication (NFC) technology.

The passive mode refers to that the second device provides power supply when the first device and the second device perform near field communication, and the active mode refers to that both the first device and the second device provide power supply when the first device and the second device perform the near field communication.

The foregoing method provided in this embodiment improves a success rate of near field communication. In addition, a working mode is activated before the near field communication; therefore, compared with a common manner in which the working mode is activated during the near field communication, time is shortened, and efficiency is improved. Besides, communication mode negotiation is also implemented, where if allowed by a remaining battery capacity of a first device, an active mode can be used; and compared with a common manner in which a second device provides power supply, a new communication mode is provided, which is more flexible in application.

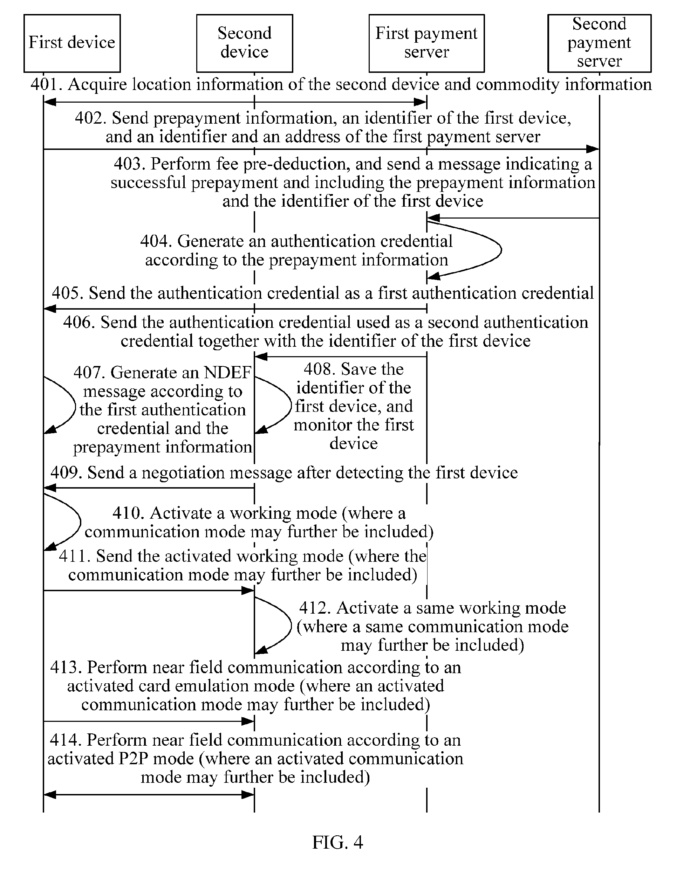

Referring to FIG. 4, yet another embodiment of the present invention further provides a working mode negotiating method, applied to a first device and a second device, where the first device refers to a device held by a user, the second device refers to a device of a merchant, and the first device and the second device can perform both wireless communication and near field communication (NFC). The method includes:
401: A first device acquires location information of a second device and commodity information from a first payment server, and provides the location information of the second device and the commodity information for a user.

In this embodiment, the first device may be a mobile terminal, a tablet computer, or the like that has an NFC function, and the first payment server refers to a server that performs fee deduction for the user after the first device makes a prepayment successfully.

Specifically, the first device may acquire the location information of the second device and the commodity information from the first payment server by means of an LBS such as a wireless communications network or a positioning manner. Usually, the first device can acquire location information of multiple second devices within a certain range and commodity information, that is, the first device can acquire location information and commodity information of multiple nearby merchants.

The wireless communications network includes, but is not limited to: a GSM (Global System of Mobile communication, Global System for Mobile Communications) network, a CDMA (Code Division Multiple Access, Code Division Multiple Access) network, and the like. The positioning manner includes, but is not limited to, a GPS (Global Positioning System, global positioning system) and the like.

402: After the user selects the second device and a commodity, the first device sends, to a second payment server, prepayment information of the commodity, an identifier of the first device, and an identifier and an address of the first payment server.

In this embodiment, the second payment server is configured to perform a prepayment procedure. The prepayment refers to that a sum of money of the user is first transferred to a prepayment account before fee deduction is truly performed on the user, and the first payment server truly deducts the sum from the prepayment account when the first device and the second device perform near field communication.

The prepayment information refers to information about a corresponding commodity after the user selects the commodity according to the location information of the second device and the commodity information, and includes, but is not limited to: a price, a color, a specification, and the like of the commodity. Further, the prepayment information may further include: a payment manner, and the payment manner refers to a payment manner of the prepayment, for example: a payment manner such as Alipay, online bank, Tenpay, or instant bank payment. Usually, the first device can acquire, according to a saved historical payment record, a payment manner preferred by the user, and therefore select the payment manner for a current prepayment, to better cater to a use habit of the user.

The first device sends the identifier and the address of the first payment server to the second payment server, so that the second payment server can communicate with a corresponding transmit server according to the identifier and the address of the first payment server after a successful prepayment.

403: The second payment server receives the prepayment information, the identifier of the first device, and the identifier and the address of the first payment server that are sent by the first device; performs, according to the prepayment information, fee pre-deduction for the commodity selected by the user; and sends, to the corresponding first payment server according to the identifier and the address of the first payment server, a message indicating a successful prepayment, where the message indicating a successful prepayment includes the prepayment information and the identifier of the first device.

404: The first payment server receives the message indicating a successful prepayment and sent by the second payment server, and generates an authentication credential according to the prepayment information in the message.

405: The first payment server sends the generated authentication credential to the first device as a first authentication credential.

406: The first payment server uses the generated authentication credential as a second authentication credential, and sends the second authentication credential together with the identifier of the first device to the second device.

It should be noted that the foregoing step 405 and step 406 are not limited to a time sequence, and may also be simultaneously performed.

407: The first device receives the first authentication credential sent by the first payment server, and generates an NDEF (Near field communication Data Exchange Format, translated as near field communication data exchange format in Chinese) message for subsequent verification.

408: The second device receives the second authentication credential and the identifier of the first device that are sent by the first payment server, saves the identifier of the first device, and monitors the first device within a preset range.

Specifically, the second device may monitor the first device in either one of the following manners:
The second device acquires, at intervals of a preset period through a communications network, location information of the first device corresponding to the device identifier of the first device; and determines, until the location information of the first device complies with a preset range, that the first device is detected, where the preset range may be a preset distance, and a specific value, for example, within one kilometer, two kilometers, or the like, is not limited in the present invention.

Alternatively, the second device monitors a card swiping device disposed within a preset range; and determines, when the first device performs card swiping on the card swiping device, that the first device is detected, where the card swiping indicates that the first device already arrives at a place near the merchant.

It should be noted that the foregoing step 407 and step 408 are not limited to a time sequence, and may also be simultaneously performed.

409: The second device sends a negotiation message to the first device after detecting the first device.

410: After receiving the negotiation message sent by the second device, the first device activates a P2P mode when determining that information about the commodity for which the prepayment has been made successfully needs to be acquired from the second device, or activates a card emulation mode when determining that information about the commodity for which the prepayment has been made successfully does not need to be acquired from the second device.

Optionally, 410 may further include: activating a passive mode when determining that a remaining battery capacity of the first device is less than a preset threshold, or activating an active mode when determining that a remaining battery capacity of the first device is not less than the preset threshold.

An operation such as sharing may be performed on the information, acquired by the first device from the second device, about the commodity for which the prepayment has been made successfully. For example, after the first device acquires the information about the commodity for which the prepayment has been made successfully, the commodity information is posted in Qzone or microblog, a link is shared, or the like.

The passive mode refers to that the second device provides power supply when the first device and the second device perform near field communication, and the active mode refers to that both the first device and the second device provide power supply when the first device and the second device perform the near field communication.

The preset threshold may be set as required; and when the remaining battery capacity of the first device is less than the preset threshold, it is regarded that the remaining battery capacity of the first device is insufficient, and it is improper to provide power supply for the near field communication. A specific value of the preset threshold is not specifically limited in the present invention, and for example, the preset threshold may be set to 40%, 50%, 60%, or the like of a total battery capacity of the first device.

411: The first device sends an activated working mode to the second device.

It should be noted that if the first device activates a communication mode in 410, the first device also sends the activated communication mode to the second device in 411.

412: The second device receives the activated working mode sent by the first device; and activates, according to the received working mode, a working mode that is the same as the activated working mode of the first device.

It should be noted that if the second device receives the activated communication mode sent by the first device, the second device activates a communication mode that is the same as the activated communication mode of the first device.

413: The first device and the second device perform near field communication according to the activated card emulation mode (where the activated communication mode may further be included), and the procedure ends.

It should be noted that if the second device receives the activated communication mode in 412, the first device and the second device perform near field communication according to the activated card emulation mode and the activated communication mode in 413.

The performing, by the first device and the second device, near field communication according to the activated card emulation mode may specifically include:
sending, by the first device, the foregoing generated NDEF message to the second device; after receiving the NDEF message, comparing, by the second device, the first authentication credential in the NDEF message with the locally saved second authentication credential, where if the first authentication credential and the second authentication credential are the same, verification on the first device succeeds, and sending a verification success message to the first payment server; and after receiving the verification success message, performing, by the first payment server, fee deduction for the commodity for which the prepayment has been made.

414: The first device and the second device perform near field communication according to the activated P2P mode, and the procedure ends.

The performing, by the first device and the second device, near field communication according to the activated P2P mode may specifically include:
sending, by the first device, the foregoing generated NDEF message to the second device; after receiving the NDEF message, comparing, by the second device, the first authentication credential in the NDEF message with the locally saved second authentication credential, where if the first authentication credential and the second authentication credential are the same, verification on the first device succeeds, and sending a verification success message to the first payment server; generating, by the second device, an NDEF message according to the second authentication credential and the information about the commodity for which the prepayment has been made successfully, and sending the NDEF message to the first device; after receiving the NDEF message, comparing, by the first device, the second authentication credential in the NDEF message with the locally saved first authentication credential, where if the second authentication credential and the first authentication credential are the same, verification on the second device succeeds, and sending a verification success message to the first payment server; and after receiving the verification success message sent by the first device and the verification success message sent by the second device, performing, by the first payment server, fee deduction for the commodity for which the prepayment has been made.

For the information, sent by the second device to the first device by using the NDEF message, about the commodity for which the prepayment has been made successfully, the first device may perform an operation such as sharing on the information about the commodity for which the prepayment has been made successfully.

It should be noted that step 413 and step 414 are alternative steps, and in the foregoing method provided in this embodiment, one of step 413 and step 414 may be selected and performed, where if both the first device and the second device activate the card emulation mode, step 413 is performed, and if both the first device and the second device activate the P2P mode, step 414 is performed.

The foregoing method provided in this embodiment improves a success rate of near field communication. In addition, a working mode is activated before the near field communication; therefore, compared with a common manner in which the working mode is activated during the near field communication, time is shortened, and efficiency is improved.

Besides, communication mode negotiation between a first device and a second device is also implemented, where if allowed by a remaining battery capacity of the first device, an active mode can be used; and compared with a common manner in which the second device provides power supply, a new communication mode is provided, which is more flexible in application. Further, a user requirement such as social sharing can also be met by selecting a P2P mode by the first device, thereby improving user experience.

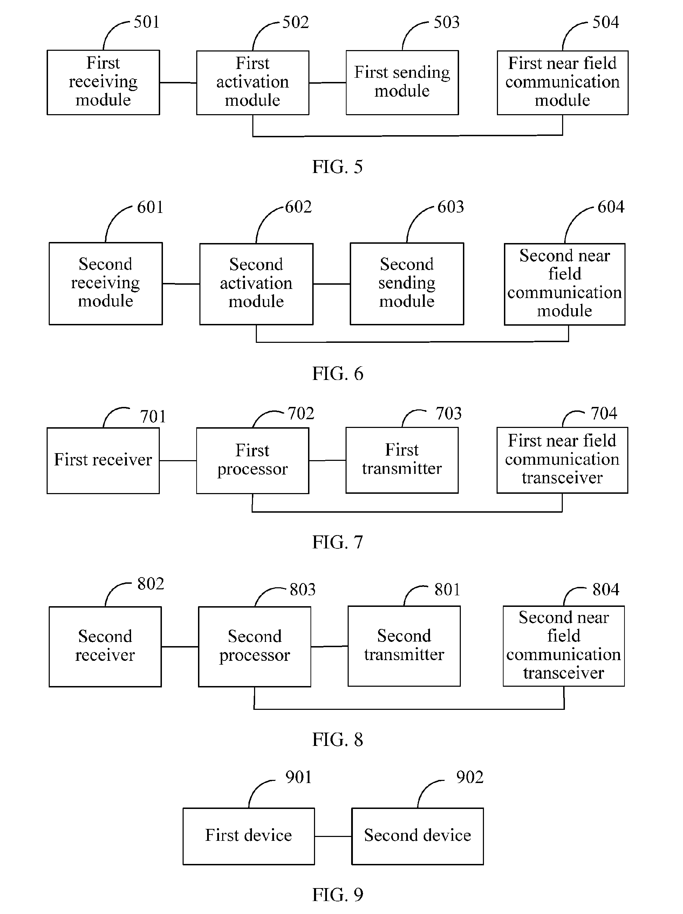

Referring to FIG. 5, another embodiment of the present invention provides a first device for working mode negotiation, including:
a first receiving module 501, configured to receive a negotiation message that a second device sends after detecting the first device;
a first activation module 502, configured to activate a P2P mode when it is determined that information about a commodity for which a prepayment has been made successfully needs to be acquired from the second device, or to activate a card emulation mode when it is determined that information about a commodity for which a prepayment has been made successfully does not need to be acquired from the second device;
a first sending module 503, configured to send an activated working mode to the second device, so that the second device activates a working mode that is the same as the activated working mode, where the activated working mode includes: the P2P mode or the card emulation mode; and
a first near field communication module 504, configured to perform communication according to the activated working mode when the first device and the second device perform communication by using a near field communication NFC technology.

With reference to the foregoing first device, in a first implementation manner, the first activation module 502 is further configured to activate a passive mode when it is determined that a remaining battery capacity of the first device is less than a preset threshold, or to activate an active mode when it is determined that a remaining battery capacity of the first device is not less than the preset threshold; and
the first sending module 503 is further configured to send an activated communication mode to the second device, so that the second device activates a communication mode that is the same as the activated communication mode, where the activated communication mode includes: the active mode or the passive mode.

With reference to the foregoing first device or the first implementation manner, in a second implementation manner, the first device further includes: a prepayment module and a first generation module, where
the prepayment module is configured to: before the first receiving module 501 receives the negotiation message sent by the second device, acquire location information of the second device and commodity information from a first payment server by using a location based service, provide the location information of the second device and the commodity information for a user, and make a prepayment according to a commodity selected by the user;
the first receiving module 501 is further configured to receive an authentication credential sent by the first payment server, where the authentication credential is generated by the first payment server according to prepayment information received from a second payment server; and
the first generation module is configured to generate an NFC data exchange format message according to the authentication credential and the prepayment information, where the NFC data exchange format message is used for NFC verification.

The passive mode refers to that the second device provides power supply when the first device and the second device perform near field communication, and the active mode refers to that both the first device and the second device provide power supply when the first device and the second device perform the near field communication.

The first device in this embodiment can execute the working mode negotiating method provided in any one of the foregoing method embodiments. Refer to the foregoing method embodiments for a specific implementation process thereof. Details are not described herein again.

The first device provided in this embodiment improves a success rate of near field communication. In addition, a working mode is activated before the near field communication; therefore, compared with a common manner in which the working mode is activated during the near field communication, time is shortened, and efficiency is improved.

Referring to FIG. 6, yet another embodiment of the present invention provides a second device for working mode negotiation, including:
a second sending module 601, configured to send a negotiation message to a first device after the first device is detected, where the negotiation message is used to trigger the first device to activate a P2P mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
a second receiving module 602, configured to receive an activated working mode sent by the first device, where the activated working mode includes: the P2P mode or the card emulation mode;
a second activation module 603, configured to activate a working mode that is the same as the activated working mode received by the second receiving module; and
a second near field communication module 604, configured to perform communication according to the activated working mode when the second device and the first device perform communication by using a near field communication NFC technology.

With reference to the foregoing second device, in a first implementation manner, the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold, where
the second receiving module 602 is further configured to receive an activated communication mode sent by the first device, where the activated communication mode includes: the active mode or the passive mode; and
the second activation module 603 is further configured to activate a communication mode that is the same as the activated communication mode.

With reference to the foregoing second device or the first implementation manner, in a second implementation manner, the second receiving module 602 is further configured to receive an authentication credential and a device identifier of the first device that are sent by a first payment server, where the authentication credential is generated by the first payment server according to prepayment information received from a second payment server; and
the second device further includes:
a monitoring module, configured to monitor the first device according to the device identifier of the first device and/or the authentication credential received by the second receiving module 602.

The second device in this embodiment can execute the working mode negotiating method provided in any one of the foregoing method embodiments. Refer to the foregoing method embodiments for a specific implementation process thereof. Details are not described herein again.

The second device provided in this embodiment improves a success rate of near field communication. In addition, a working mode is activated before the near field communication; therefore, compared with a common manner in which the working mode is activated during the near field communication, time is shortened, and efficiency is improved.

Referring to FIG. 7, another embodiment of the present invention further provides a first device for working mode negotiation, including:
a first receiver 701, configured to receive a negotiation message that a second device sends after detecting the first device;
a first processor 702, configured to activate a P2P mode when it is determined that information about a commodity for which a prepayment has been made successfully needs to be acquired from the second device, or to activate a card emulation mode when it is determined that information about a commodity for which a prepayment has been made successfully does not need to be acquired from the second device;
a first transmitter 703, configured to send an activated working mode to the second device, so that the second device activates a working mode that is the same as the activated working mode, where the activated working mode includes: the P2P mode or the card emulation mode; and
a first near field communication transceiver 704, configured to perform communication according to the activated working mode when the first device and the second device perform communication by using a near field communication NFC technology.

With reference to the foregoing first device, in a first implementation manner, the first processor 702 is further configured to activate a passive mode when it is determined that a remaining battery capacity of the first device is less than a preset threshold, or to activate an active mode when it is determined that a remaining battery capacity of the first device is not less than the preset threshold; and
the first transmitter 703 is further configured to send an activated communication mode to the second device, so that the second device activates a communication mode that is the same as the activated communication mode, where the activated communication mode includes: the active mode or the passive mode.

With reference to the foregoing first device or the first implementation manner, in a second implementation manner, the first processor 702 is further configured to:
before the first receiver 701 receives the negotiation message sent by the second device, acquire location information of the second device and commodity information from a first payment server by using a location based service, provide the location information of the second device and the commodity information for a user, and make a prepayment according to a commodity selected by the user, where
the first receiver 701 is further configured to receive an authentication credential sent by the first payment server, where the authentication credential is generated by the first payment server according to prepayment information received from a second payment server; and
the first processor 702 is further configured to generate an NFC data exchange format message according to the authentication credential and the prepayment information, where the NFC data exchange format message is used for NFC verification.

The passive mode refers to that the second device provides power supply when the first device and the second device perform near field communication, and the active mode refers to that both the first device and the second device provide power supply when the first device and the second device perform the near field communication.

The first device provided in this embodiment improves a success rate of near field communication. In addition, a working mode is activated before the near field communication; therefore, compared with a common manner in which the working mode is activated during the near field communication, time is shortened, and efficiency is improved.

Referring to FIG. 8, yet another embodiment of the present invention further provides a second device for working mode negotiation, including:
a second transmitter 801, configured to send a negotiation message to a first device after the first device is detected, where the negotiation message is used to trigger the first device to activate a P2P mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
a second receiver 802, configured to receive an activated working mode sent by the first device, where the activated working mode includes: the P2P mode or the card emulation mode;
a second processor 803, configured to activate a working mode that is the same as the activated working mode received by the second receiver; and
a second near field communication transceiver 804, configured to perform communication according to the activated working mode when the second device and the first device perform communication by using a near field communication NFC technology.

With reference to the foregoing second device, in a first implementation manner, the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold, where
the second receiver 802 is further configured to receive an activated communication mode sent by the first device, where the activated communication mode includes: the active mode or the passive mode; and
the second processor 803 is further configured to activate a communication mode that is the same as the activated communication mode.

With reference to the foregoing second device or the first implementation manner, in a second implementation manner, the second receiver 802 is further configured to receive an authentication credential and a device identifier of the first device that are sent by a first payment server, where the authentication credential is generated by the first payment server according to prepayment information received from a second payment server; and
the second processor 803 is further configured to detect the first device according to the device identifier of the first device and/or the authentication credential received by the second receiver 802.

The second device provided in this embodiment improves a success rate of near field communication. In addition, a working mode is activated before the near field communication; therefore, compared with a common manner in which the working mode is activated during the near field communication, time is shortened, and efficiency is improved.

Referring to FIG. 9, still yet another embodiment of the present invention provides a working mode negotiating system, including a first device 901 and a second device 902. The first device 901 may be the first device in any one of the foregoing embodiments, and a specific function is the same as that described in the foregoing embodiments and is not described herein again. The second device 902 may be the second device in any one of the foregoing embodiments, and a specific function is the same as that described in the foregoing embodiments and is not described herein again.

The system in this embodiment can execute the working mode negotiating method provided in any one of the foregoing method embodiments. Refer to the foregoing method embodiments for a specific implementation process thereof. Details are not described herein again.

The foregoing system provided in this embodiment improves a success rate of near field communication. In addition, a working mode is activated before the near field communication; therefore, compared with a common manner in which the working mode is activated during the near field communication, time is shortened, and efficiency is improved. Besides, communication mode negotiation is also implemented, where if allowed by a remaining battery capacity of a first device, an active mode can be used; and compared with a common manner in which a second device provides power supply, a new power supply mode is provided, which is more flexible in application.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A working mode negotiating method, wherein the method comprises:
Receiving, by a first device, a negotiation message that a second device sends after detecting the first device;
Activating, by the first device, a P2P mode when determining that information about a commodity for which a prepayment has been made successfully needs to be acquired from the second device;
Activating, by the first device, a card emulation mode when determining that information about a commodity for which a prepayment has been made successfully does not need to be acquired from the second device;
Sending, by the first device, an activated working mode to the second device, so that the second device activates a working mode that is the same as the activated working mode, wherein the activated working mode comprises: the P2P mode or the card emulation mode; and
Performing communication according to the activated working mode when the first device and the second device perform communication by using a near field communication NFC technology.

2. The method according to claim 1, wherein after the first device receives the negotiation message sent by the second device, the method further comprises:
activating, by the first device, a passive mode when determining that a remaining battery capacity of the first device is less than a preset threshold;
activating, by the first device, an active mode when determining that a remaining battery capacity of the first device is not less than the preset threshold; and
sending, by the first device, an activated communication mode to the second device, so that the second device activates a communication mode that is the same as the activated communication mode, wherein the activated communication mode comprises: the active mode or the passive mode.

3. The method according to claim 1 or 2, wherein before the first device receives the negotiation message sent by the second device, the method further comprises:
acquiring, by the first device, location information of the second device and commodity information from a first payment server by using a location based service; providing the location information of the second device and the commodity information for a user; and making a prepayment according to a commodity selected by the user;
receiving, by the first device, an authentication credential sent by the first payment server, wherein the authentication credential is generated by the first payment server according to prepayment information received from a second payment server; and
generating, by the first device, an NFC data exchange format message according to the authentication credential and the prepayment information, wherein the NFC data exchange format message is used for NFC verification.

4. A working mode negotiating method, wherein the method comprises:
Sending, by a second device, a negotiation message to a first device after detecting the first device, wherein the negotiation message is used to trigger the first device to activate a P2P mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
receiving, by the second device, an activated working mode sent by the first device, and activating a working mode that is the same as the activated working mode, wherein the activated working mode comprises: the P2P mode or the card emulation mode; and
performing communication according to the activated working mode when the second device and the first device perform communication by using a near field communication NFC technology.

5. The method according to claim 4, wherein the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold.

6. The method according to claim 4 or 5, wherein the method further comprises:
receiving an activated communication mode sent by the first device, and activating a communication mode that is the same as the activated communication mode, wherein the activated communication mode comprises: the active mode or the passive mode.

7. The method according to any one of claims 4 to 6, wherein the method further comprises:
receiving, by the second device, an authentication credential and a device identifier of the first device that are sent by a first payment server, wherein the authentication credential is generated by the first payment server according to prepayment information received from a second payment server; and
monitoring, by the second device, the first device according to the device identifier of the first device and/or the authentication credential.

8. The method according to claim 7, wherein the monitoring, by the second device, the first device according to the device identifier of the first device and/or the authentication credential comprises:
acquiring, by the second device at intervals of a preset period through a communications network, location information of the first device corresponding to the device identifier of the first device; and determining, until the location information of the first device complies with a preset range, that the first device is detected; or
monitoring, by the second device, a card swiping device disposed within a preset range; and determining, when the first device performs card swiping on the card swiping device, that the first device is detected.

9. A first device for working mode negotiation, wherein the first device comprises:
a first receiving module, configured to receive a negotiation message that a second device sends after detecting the first device;
a first activation module, configured to activate a P2P mode when it is determined that information about a commodity for which a prepayment has been made successfully needs to be acquired from the second device, or to activate a card emulation mode when it is determined that information about a commodity for which a prepayment has been made successfully does not need to be acquired from the second device;
a first sending module, configured to send an activated working mode to the second device, so that the second device activates a working mode that is the same as the activated working mode, wherein the activated working mode comprises: the P2P mode or the card emulation mode; and
a first near field communication module, configured to perform communication according to the activated working mode when the first device and the second device perform communication by using a near field communication NFC technology.

10. The first device according to claim 9, wherein
the first activation module is further configured to activate a passive mode when it is determined that a remaining battery capacity of the first device is less than a preset threshold, or to activate an active mode when it is determined that a remaining battery capacity of the first device is not less than the preset threshold; and
the first sending module is further configured to send an activated communication mode to the second device, so that the second device activates a communication mode that is the same as the activated communication mode, wherein the activated communication mode comprises: the active mode or the passive mode.

11. The first device according to claim 9 or 10, wherein the first device further comprises: a prepayment module and a first generation module, wherein
the prepayment module is configured to: before the first receiving module receives the negotiation message sent by the second device, acquire location information of the second device and commodity information from a first payment server by using a location based service, provide the location information of the second device and the commodity information for a user, and make a prepayment according to a commodity selected by the user;
the first receiving module is further configured to receive an authentication credential sent by the first payment server, wherein the authentication credential is generated by the first payment server according to prepayment information received from a second payment server; and
the first generation module is configured to generate an NFC data exchange format message according to the authentication credential and the prepayment information, wherein the NFC data exchange format message is used for NFC verification.

12. A second device for working mode negotiation, wherein the second device comprises:
a second sending module, configured to send a negotiation message to a first device after the first device is detected, wherein the negotiation message is used to trigger the first device to activate a P2P mode when the first device determines that information about a commodity for which a prepayment has been made successfully needs to be acquired from the second device, or to activate a card emulation mode when the first device determines that information about a commodity for which a prepayment has been made successfully does not need to be acquired from the second device;
a second receiving module, configured to receive an activated working mode sent by the first device, wherein the activated working mode comprises: the P2P mode or the card emulation mode;
a second activation module, configured to activate a working mode that is the same as the activated working mode received by the second receiving module; and
a second near field communication module, configured to perform communication according to the activated working mode when the second device and the first device perform communication by using a near field communication NFC technology.

13. The second device according to claim 12, wherein the negotiation message is further used to trigger the first device to activate a passive mode when the first device determines that a remaining battery capacity of the first device is less than a preset threshold, or to activate an active mode when the first device determines that a remaining battery capacity of the first device is not less than the preset threshold, where
the second receiving module is further configured to receive an activated communication mode sent by the first device, wherein the activated communication mode comprises: the active mode or the passive mode; and
the second activation module is further configured to activate a communication mode that is the same as the activated communication mode.

14. The second device according to claim 12 or 13, wherein
the second receiving module is further configured to receive an authentication credential and a device identifier of the first device that are sent by a first payment server, wherein the authentication credential is generated by the first payment server according to prepayment information received from a second payment server; and
the second device further comprises:
a monitoring module, configured to monitor the first device according to the device identifier of the first device and/or the authentication credential received by the second receiving module.

15. A working mode negotiating system, wherein the system comprises: the first device for working mode negotiation according to any one of claims 9 to 11 and the second device for working mode negotiation according to any one of claims 12 to 14.
